# EUROPÄISCHE PATENTSCHRIFT

(11) **EP 2 949 513 B1**
(45) Veröffentlichungstag und Bekanntmachung des Hinweises auf die Patenterteilung: **30.08.2017**
(21) Anmeldenummer: 15001130.2
(22) Anmeldetag: 17.04.2015
(51) Int. Cl.: B60R 7/00, B60P 7/08, B60R 21/06

(54) **HALTE- UND/ODER TRENNNETZ**
HOLDING AND/OR SEPARATION NET
FILET DE RETENUE ET/OU DE SÉPARATION

(30) Priorität: 30.05.2014 DE 102014008102
(43) Veröffentlichungstag der Anmeldung: 02.12.2015
(73) Patentinhaber: Nölle-Pepin GmbH & Co. KG., 58332 Schwelm (DE)
(72) Erfinder: Emde, Marc, 58256 Ennepetal (DE)
(74) Vertreter: Lelgemann, Karl-Heinz

(56) Entgegenhaltungen:
- WO-A1-96/08391
- DE-U1- 20 117 369
- FR-A1- 2 967 951
- GB-A- 2 196 907

## Beschreibung

Die Erfindung bezieht sich auf ein Halte- und/oder Trennnetz mit einem Netzgeflechtteil und einem elastischen Halteglied, das an einem Öffnungsrand des Netzgeflechtteils angeordnet und an seinen Befestigungsabschnitten mit Fixierteilen in Eingriff bringbar ist. Derartige Halte- und/oder Trennnetze kommen in einem verbreiteten Umfang zum Einsatz. Das elastische Halteglied derartiger Halte- und/oder Trennnetze besteh häufig bzw. üblicherweise aus einer geflochtenen elastischer Kordel, die an ihren Enden mit Fixierteilen in Eingriff zu bringen ist, wobei hierzu oft Übergangsteile erforderlich sind. Aus dem Dokument FR 2967951 A1 ist ein Halte-und/oder Trennnetz nach dem Oberbegriff des Anspruchs 1 bekannt.

Ausgehend von dem vorstehend geschilderten Stand der Technik liegt der Erfindung die Aufgabe zugrunde, ein gattungsgemäßes Halte- und/oder Trennnetz derart weiterzubilden, dass es mit einem geringeren technisch-konstruktiven Aufwand herstellbar ist.

Diese Aufgabe wird erfindungsgemäß dadurch gelöst, dass das elastische Halteglied als länglicher elastischer Gewebestreifen ausgestaltet ist, der an seinen den Fixierteilen zugeordneten Befestigungsabschnitten jeweils eine Öffnung zum Eingriff mit jeweils einem Fixierteil aufweist. Erfindungsgemäß können irgendwelche Übergangsteile zwischen denjenigen Fixierteilen, an denen das elastische Halteglied anzubringen ist, entfallen, da aufgrund der an den Befestigungsabschnitten des elastischen Halteglieds vorgesehenen Öffnungen unmittelbar ein Eingriff zwischen dem elastischen Halteglied einerseits und den Fixierteilen andererseits, wie sie üblicherweise ausgestaltet sind, herstellbar ist.

Um mit einem quasi endlos herstellbaren, als Gewebestreifen ausgebildeten elastischen Halteglied ohne irgendwelche aufwändigen Konstruktionsmaßnahmen elastischer Halteglieder in unterschiedlichsten Anforderungsprofilen entsprechender Länge herstellen zu können, ist es vorteilhaft, wenn der das elastische Halteglied ausbildende Gewebestreifen in alternierender Aufeinanderfolge eine Vielzahl Öffnungen und eine Vielzahl geschlossene Streifenabschnitte aufweist. Durch einfaches Durchtrennen des Gewebestreifens an einem geschlossenen Streifenabschnitt kann dann ein elastisches Halteglied in der gewünschten Länge erstellt werden.

Gemäß einer vorteilhaften Weiterbildung ist der Gewebestreifen des elastischen Halteglieds als zweilagiger Doppelgewebestreifen ausgebildet, an dessen geschlossenen Streifenabschnitten die zwei ihn ausbildenden Gewebestreifen miteinander verbunden und an dessen mit Öffnungen versehenen Streifenabschnitten die zwei Gewebestreifen des Doppelgewebestreifens nicht miteinander verbunden sind.

Alternativ kann der Gewebestreifen auch drei- oder mehrlagig ausgebildet werden, wobei an den geschlossenen Streifenabschnitten die Gewebestreifen miteinander verbunden und an den mit Öffnungen versehenen Streifenabschnitten zumindest zwei Gewebestreifen nicht miteinander verbunden sind.

Selbstverständlich sind auch Ausführungsformen des erfindungsgemäßen Halte- und/oder Trennnetzes möglich, bei denen zwei oder mehrere als längliche elastische Gewebestreifen ausgebildete elastische Halteglieder vorgesehen sind, von denen jedes an einem ihm zugeordneten Randabschnitt des Netzgeflechtteils angeordnet ist.

Im Folgenden wird die Erfindung anhand von Ausführungsformen unter Bezugnahme auf die Zeichnung näher erläutert.

Es zeigen:
- Figur 1: eine Prinzipdarstellung einer Ausführungsform eines erfindungsgemäßen Halte- und/oder Trennnetzes;
- Figur 2: eine Ausführungsform eines elastischen Halteglieds des in Figur 1 gezeigten erfindungsgemäßen Halteund/oder Trennnetzes; und
- Figur 3: eine weitere Ausführungsform des elastischen Halteglieds des in Figur 1 gezeigten erfindungsgemäßen Halte- und/oder Trennnetzes.

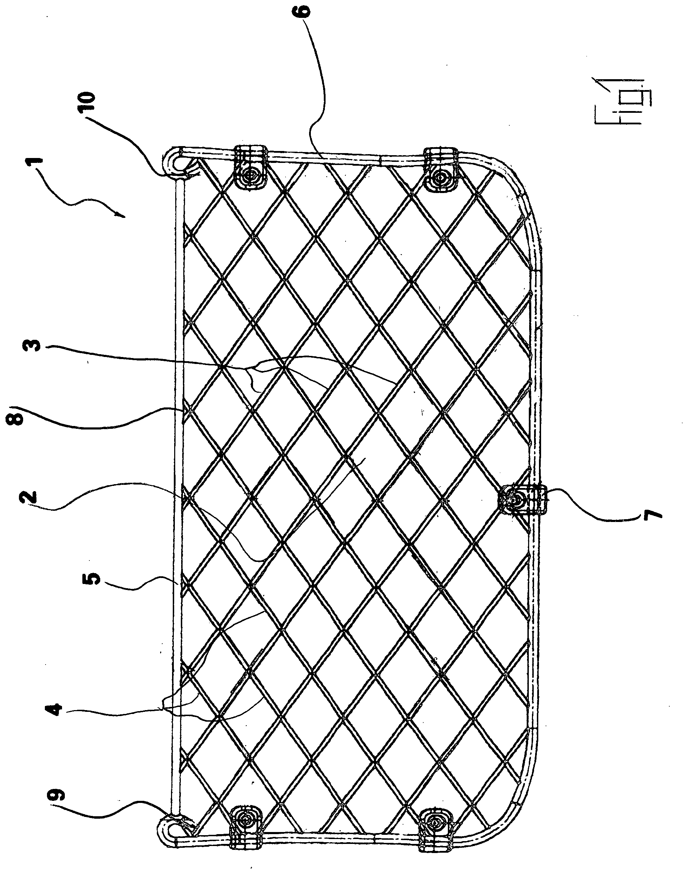

Ein in Figur 1 in einer Ausführungsform gezeigtes erfindungsgemäßes Haltenetz 1 dient der Aufnahme und Halterung von Gegenständen und ist hierzu an eine in den Figuren nicht gezeigte Montagefläche montiert. Die Gegenstände können dann zwischen das Haltenetz 1 und die Montagefläche eingeführt und dort gehaltert werden.

Anstelle des Haltenetzes 1 kann die im Folgenden dargestellte Erfindung auch bei einem Trennnetz realisiert werden, welches beispielsweise der Abtrennung des Kofferraums vom übrigen Innenraum eines Kraftfahrzeugs dienen kann.

Das in Figur 1 anhand einer Ausführungsform gezeigte erfindungsgemäße Haltenetz 1 hat ein Netzgeflechtteil 2, welches aus zwei Strangscharen 3, 4 gebildet ist, die jeweils aus einer Vielzahl zueinander paralleler und mit Abstand zueinander angeordneter Netzstränge bestehen. Mittels der beiden Strangscharen 3, 4 werden die Netzmaschen bzw. -rauten des Netzgeflechtteils 2 gebildet.

Bei dem in Figur 1 gezeigten Ausführungsbeispiel des erfindungsgemäßen Haltenetzes 1 ist an der oberen Kante des Netzgeflechtteils 2 ein elastisches Halteglied 5 vorgesehen. Das elastische Halteglied 5 liegt üblicherweise an der in den Figuren nicht gezeigten Montagefläche an und schließt somit den Zwischenraum zwischen dem Haltenetz 1 und der Montagefläche.

An seinen beiden Enden ist das elastische Halteglied 5 mit einem im dargestellten Ausführungsbeispiel etwa U-förmigen vergleichsweise starren Randglied 6 des Haltenetzes 1 verbunden. Dieses starre Randglied 6 durchgreift die Randmaschen bzw. -rauten des Netzgeflechtteils 2 und spannt dieses auf.

Am vergleichsweise starren Randglied 6 sind Befestigungsmittel 7 vorgesehen, mittels denen das vergleichsweise starre Randglied 6 und damit das Haltenetz 1 an der in den Figuren nicht gezeigten Montagefläche anbringbar bzw. angebracht ist.

An seinen beiden Endabschnitten ist das im dargestellten Ausführungsbeispiel am oberen Randabschnitt 8 angeordnete elastische Halteglied 5 mit zwei Fixierteilen 9, 10 in Eingriff, die an den beiden Enden des vergleichsweise starren Randglieds 6 ausgebildet sind, welches das Netzgeflechtteil 2 des Haltenetzes 1 an den nicht vom elastischen Halteglied 5 belegten Randabschnitten des Netzgeflechtteils 2 aufspannt.

Im dargestellten Ausführungsbeispiel werden die Fixierteile 9, 10 des vergleichsweise starren Randglieds 6 durch einfache Abbiegungen dieses vergleichsweise starren Randglieds 6 gebildet.

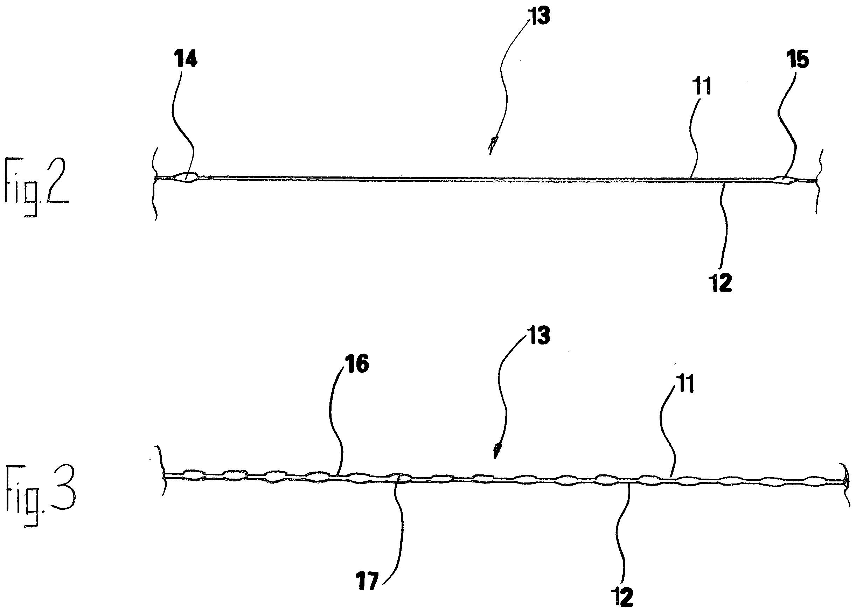

Das in einer ersten Ausführungsform in Figur 2 prinzipiell dargestellte elastische Halteglied 5 hat zwei Gewebestreifen 11, 12. Diese beiden Gewebestreifen 11, 12 sind bei dem in Figur 2 gezeigten Ausführungsbeispiel nahezu über ihre gesamte Länge miteinander verbunden und bilden somit einen Doppelgewebestreifen 13. An den beiden Befestigungsabschnitten dieses Doppelgewebestreifens 13, an denen dieser mit den beiden Fixierteilen 9, 10 des vergleichsweise starren Randglieds 6 des Haltenetzes in Eingriff bringbar ist, sind die beiden Gewebestreifen 11, 12 nicht miteinander verbunden, so dass dort zwischen den beiden Gewebestreifen 11, 12 Öffnungen 14, 15 vorliegen. Durch diese Öffnungen 14, 15 ist der Doppelgewebestreifen 13 auf die beiden randgliedseitigen Fixierteile 9, 10 aufschiebbar.

In Figur 2 ist angedeutet, dass sich der Doppelgewebestreifen 13 quasi endlos herstellen lässt, wobei im vorgebbaren Abstand die Öffnungen 14, 15 vorgesehen sind und unmittelbar neben den jeweiligen Öffnungen 14, 15 eine Durchtrennung vorgenommen wird, um den Doppelgewebestreifen 13 in der gewünschten Länge und mit der gewünschten Elastizität zu vereinzeln und dann am ihm zugeordneten Randabschnitt 8 des Netzgeflechtteils 2 anzuordnen und mit den beiden Fixierteilen 9, 10 des vergleichsweise starren Randglieds 6 des Haltenetzes 1 in Eingriff zu bringen.

Figur 3 zeigt eine Ausführungsform des elastischen Halteglieds 5, bei dem die beiden Gewebestreifen 11, 12 des Doppelgewebestreifens 13 alternierend geschlossene Streifenabschnitte 16 und Öffnungen 17 aufweisen, wobei die beiden Gewebestreifen 11, 12 an den Öffnungen 17 nicht miteinander verbunden sind. Hierbei sind die geschlossenen Streifenabschnitte 16 etwa so lang wie die die Öffnungen 17 ausbildenden Streifenabschnitte. Entsprechend lässt sich der in Figur 3 gezeigte Doppelgewebestreifen 13 je nach Anforderungsprofil durchtrennen, so dass quasi in beliebiger Länge elastische Halteglieder 5 für Haltenetze 1 unterschiedlicher Dimensionierungen gebildet werden können.

## Patentansprüche

1. Halte- und/oder Trennnetz, mit einem Netzgeflechtteil (2) und einem elastischen Halteglied (5), das an einem Randabschnitt (8) des Netzgeflechtteils (2) angeordnet, an seinen Befestigungsabschnitten mit Fixierteilen (9, 10) in Eingriff bringbar ist, und an seinen den Fixierteilen (9, 10) zugeordneten Befestigungsabschnitten jeweils eine Öffnung (14, 15; 17) zum Eingriff mit jeweils einem Fixierteil (9, 10) aufweist, **dadurch gekennzeichnet, dass** das elastische Halteglied (5) als länglicher elastischer Gewebestreifen (13) ausgestaltet ist.

2. Halte- und/oder Trennnetz nach Anspruch 1, dessen Gewebestreifen (13) in alternierender Aufeinanderfolge eine Vielzahl Öffnungen (17) und eine Vielzahl geschlossene Streifenabschnitte (16) aufweist.

3. Halte- und/oder Trennnetz nach Anspruch 1 oder 2, dessen Gewebestreifen (13) als zweilagiger Doppelgewebestreifen (13) ausgebildet ist, an dessen geschlossenen Streifenabschnitten (16) die zwei Gewebestreifen (11, 12) des Doppelgewebestreifens (13) miteinander verbunden und an dessen mit Öffnungen (14, 15; 17) versehenen Streifenabschnitten die zwei Gewebestreifen (11, 12) des Doppelgewebestreifens (13) nicht miteinander verbunden sind.

4. Halte- und/oder Trennnetz nach einem der Ansprüche 1 bis 3, dessen Gewebestreifen (13) drei- oder mehrlagig ausgebildet ist, an dessen geschlossenen Streifenabschnitten (16) die Gewebestreifen miteinander verbunden und an dessen mit Öffnungen (14, 15; 17) versehenen Streifenabschnitten zumindest zwei Gewebestreifen nicht miteinander verbunden sind.

5. Halte- und/oder Trennnetz nach einem der Ansprüche 1 bis 4, das zwei oder mehrere als längliche elastische Gewebestreifen (13) ausgebildete elastische Halteglieder (5) aufweist, von denen jedes an einem ihm zugeordneten Randabschnitt (8) des Netzgeflechtteils (2) angeordnet ist.

## Claims

1. A holding and/or separating net having a net mesh part (2) and an elastic holding member (5) which is arranged on a peripheral portion (8) of the net mesh part (2) can be brought into engagement at its fastening portions with fixing parts (9, 10) and has an opening (14, 15; 17) at its fastening portions assigned to the fixing parts (9, 10) for engagement with a fixing part (9, 10) in each case, **characterized in that** the elastic holding member (5) is configured as an elongate strip of elastic fabric (13).

2. The holding and/or separating net according to claim 1, the fabric strips (13) whereof have a plurality of openings (17) in an alternating sequence and a plurality of closed strip portions (16).

3. The holding and/or separating net according to claim 1 or 2, the fabric strip (13) whereof is configured as a two-ply double fabric strip (13), at the closed strip portions (16) whereof the two fabric strips (11, 12) of the double fabric strip (13) are connected to one another and at the strip portions whereof provided with openings (14, 15; 17), the two fabric strips (11, 12) of the double fabric strip (13) are not connected to one another.

4. The holding and/or separating net according to one of claims 1 to 3, the fabric strip (13) whereof has a three-ply or multi-ply design, at the closed strip portions (16) whereof the fabric strips are connected to one another and at the strip portions whereof provided with openings (14, 15; 17) at least two fabric strips are not connected to one another.

5. The holding and/or separating net according to one of claims 1 to 4, which exhibits two or a plurality of elastic holding members (5) configured as elongate elastic fabric strips (13), each of which is arranged on a peripheral portion (8) of the net mesh part (2) assigned to it.

## Revendications

1. Filet de retenue et/ou de séparation avec une partie de tressage de filet (2) et un élément de retenue élastique (5) qui est disposé sur une section de bord (8) de la partie de tressage de filet (2) et peut être mis en prise au niveau de ses sections de fixation avec des parties de fixation (9, 10) et présente, au niveau de ses sections de fixation associées aux parties de fixation (9, 10), respectivement une ouverture (14, 15 ; 17) pour la mise en prise avec respectivement une partie de fixation (9, 10),
**caractérisé en ce que** l'élément de retenue élastique (5) est réalisé en tant que bande de tissus élastique oblongue (13).

2. Filet de retenue et/ou de séparation selon la revendication 1, dont la bande de tissu (13) présente, selon une succession alternée, une pluralité d'ouvertures (17) et une pluralité de sections de bande (16) fermées.

3. Filet de retenue et/ou de séparation selon la revendication 1 ou 2, dont la bande de tissu (13) est réalisée en tant que bande de double tissu à deux couches (13) au niveau des sections de bande fermées (16) de laquelle les deux bandes de tissu (11, 12) de la bande de double tissu (13) sont reliées l'une à l'autre et au niveau des sections de bande munies d'ouvertures (14, 15 ; 17) de laquelle les deux bandes de tissu (11, 12) de la bande de double tissu (13) ne sont pas reliées l'une à l'autre.

4. Filet de retenue et/ou de séparation selon l'une des revendications 1 à 3, dont la bande de tissu (13) est réalisée en trois couches ou de façon multicouches, au niveau des sections de bande fermées (16) de laquelle les bandes de tissu sont reliées les unes aux autres et au niveau des sections de bande munies d'ouvertures (14, 15 ; 17) de laquelle au moins deux bandes de tissu ne sont pas reliées l'une à l'autre.

5. Filet de retenue et/ou de séparation selon l'une des revendications 1 à 4, lequel présente deux ou davantage d'éléments de retenue élastiques (5) réalisés en tant que bandes de tissu élastiques oblongues (13), chacun de ceux-ci étant disposé au niveau d'une section de bord (8) qui lui est associée de la partie de tressage de filet (2).
